# EUROPÄISCHE PATENTANMELDUNG

(11) **EP 1 710 470 A2**
(43) Veröffentlichungstag der Anmeldung: **11.10.2006**
(21) Anmeldenummer: 06110251.3
(22) Anmeldetag: 22.02.2006
(51) Int. Cl.: F16H 1/16

(54) **Getriebezahnrad mit einer Anlaufscheibe, sowie Verfahren zum Herstellen eines solchen**

(30) Priorität: 08.04.2005 DE 102005016183
(71) Anmelder: ROBERT BOSCH GMBH, 70442 Stuttgart (DE)
(72) Erfinder: Louvel, Fabian, 67000 Strasbourg (FR); Ihle, Daniel, 77815 Buehl-Altschweier (DE); Riedinger, Markus, 77839 Lichtenau-Ulm (DE)

(57) **Zusammenfassung**

Getriebezahnrad (10), sowie ein Spindelgetriebe (44) beinhaltend ein solches, mit einer Außenverzahnung (16, 18) zum Einleiten eines Antriebmoments, und mit einer Anlaufscheibe (12, 13) zur axialen Fixierung des Getriebezahnrads (10) in einem Getriebegehäuse (22), wobei an dem Getriebezahnrad (10) über dessen Umfang (32) eine Ringnut (36) angeformt ist, in die die Anlaufscheibe (12, 13) drehbar eingreift, und die Anlaufscheibe (12, 13) als eine über den Umfang (32) geschlossene, einteilige Ringscheibe (13) ausgebildet ist, die unlösbar in das Getriebezahnrad (10) integriert ist.

## Beschreibung

### Stand der Technik

Die Erfindung betrifft ein Getriebezahnrad mit einer Anlaufscheibe, sowie ein Verfahren zum Herstellen eines Getriebezahnrads mit Anlaufscheibe nach der Gattung der unabhängigen Ansprüche.

Mit der DE 37 26 801 C2 ist ein Schneckengetriebe bekannt geworden, bei dem ein auf einer Abtriebswelle angeordnetes Schneckenrad mittels einer eine Schnecke aufweisenden Eingangswelle angetrieben wird. Zur axialen Fixierung der Abtriebswelle im Getriebegehäuse ist in die Abtriebswelle eine umlaufende Ringnut ausgeformt. In diese Ringnut greift eine Lagerscheibe ein, die mit ihrem äußeren Umfang im Getriebegehäuse befestigt ist. Damit die Lagerscheibe die Ringnut der Abtriebswelle über den Umfang umschließt, ist diese aus Montagegründen zweiteilig ausgebildet. Die Herstellung und die Montage einer solchen zweiteiligen Anlaufscheibe in das Getriebegehäuse und in die Nut der Abtriebswelle ist recht aufwändig und hat eine Toleranzkette zur Folge, die nur einen unbefriedigenden Längsspielausgleich der Antriebswelle erlaubt.

### Vorteile der Erfindung

Die erfindungsgemäße Vorrichtung und das erfindungsgemäße Verfahren mit den Merkmalen der unabhängigen Ansprüche haben den Vorteil, dass ein Getriebezahnrad mit einer integrierten Anlaufscheibe erzeugt wird, deren axiale Toleranzen bezüglich des Eingriffs in die Ringnut des Getriebezahnrads auf ein Minimum reduziert sind. Dadurch ist in einem Arbeitsgang eine axiale Fixierungsmöglichkeit des Getriebezahnrads geschaffen, die in eingebautem Zustand einen optimalen Längsspielausgleich aufweist. Aufgrund der einteiligen Ausführung der Anlaufscheibe entfällt eine aufwändige Justierung mehrerer Teilscheiben, bzw. wird ein Verkanten der mehreren Teile in der Ringnut des Getriebezahnrads verhindert.

Durch die in den Unteransprüchen ausgeführten Merkmale sind vorteilhafte Weiterbildungen der Vorrichtung nach den unabhängigen Ansprüchen möglich. Durch die unlösbare Anordnung der Anlaufscheibe in der Ringnut des Getriebezahnrads entfällt ein zusätzlicher Montageschritt. Durch den Herstellungsprozess wird dabei ein optimales radiales und axiales Spiel zwischen der Anlaufscheibe und der Ringnut erzielt. Dadurch wird einerseits die Reibung zwischen dem Getriebezahnrad und der Anlaufscheibe im Betriebszustand reduziert, und andererseits steht eine zuverlässige axiale Abstützung des Getriebezahnrads, sowie der darin angeordneten Gewindespindel zur Verfügung, die auch hohe Crashkräfte aufnehmen kann.

Ein Vorteil ist es, wenn die Außenkontur der Anlaufscheibe beispielsweise eine etwa viereckige Form aufweist. Dadurch wird eine zuverlässige Verdrehsicherung bezüglich des Getriebegehäuses geschaffen, wobei die Außenkontur auch variiert werden kann, solange diese einen ausreichenden Formschluss bezüglich deren Drehung in dem Getriebegehäuse bildet. Dadurch wird auf einfache Weise ein Mitdrehen der Anlaufscheibe mit dem Getriebezahnrad unterbunden.

Besonders günstig ist es, wenn das Getriebezahnrad als Schneckenrad mit einer äußeren Schneckenradverzahnung ausgeformt ist. Dadurch kann dieses Schneckenrad mittels einer Schnecke angetrieben werden, die beispielsweise auf einer Abtriebswelle eines Elektromotors angeordnet ist.

Ist das Getriebezahnrad zusätzlich als Hohlrad ausgeformt, kann das Antriebsmoment auf sehr kleinem Bauraum auf eine Spindel übertragen werden, die in dem Schneckenhohlrad angeordnet ist. Kämmt das Getriebehohlrad beispielsweise mit einer durchtauchenden Spindel, kann eine Längsverstellung eines zu verstellenden Teils in beide Richtungen realisiert werden.

In einer bevorzugten Ausgestaltung ist die Anlaufscheibe aus Metall - vorzugsweise Stahl - gefertigt, und das Getriebezahnrad aus Kunststoff - beispielsweise POM - gespritzt. Dadurch ergibt sich eine optimale Materialkombination, woraus eine minimale Reibung und ein minimaler Verschleiß resultiert.

Bevorzugt wird das erfmdungsgemäße Getriebezahnrad in einem Spindelgetriebe verbaut, bei dem sowohl die Antriebselement, als auch die Spindel, die das Getriebezahnrad durchdringt, in einem kompakten Getriebegehäuse angeordnet sind.

Bei der Montage des Getriebes wird die in das Getriebezahnrad integrierte Anlaufscheibe mit leichtem Druck in eine entsprechende Aufnahme im Getriebegehäuse eingedrückt, so dass zwischen der Anlaufscheibe und dem Getriebegehäuse kein Axialspiel auftritt. Dabei entfällt die Montage eines zusätzlichen Spannelements, wie dies beispielsweise bei der Montage von separaten Anlaufscheiben zur Eliminierung des Längsspiels notwendig ist, die beispielsweise jeweils an einer axialen Seite des Getriebezahnrads anliegen.

Die Aufnahme im Getriebegehäuse weist beispielsweise quer zur Axialrichtung des Getriebezahnrads ebenfalls eine annäherungsweise viereckigen Form auf, wodurch der Formschluss zur Drehsicherung der Anlaufscheibe geschaffen wird.

Aufgrund der Ausbildung von glatten, radialen Lageroberflächen am Getriebezahnrad kann dieses direkt ohne zusätzliche Lagerelemente im Getriebegehäuse gelagert werden. Zur sicheren Führung des Getriebezahnrads im Getriebegehäuse ist es dabei günstig, wenn die radialen Lageroberflächen axial zu beiden Seiten der Anlaufscheibe angeordnet sind.

Eine besonders günstige Montage des Getriebes ergibt sich, wenn das Getriebezahnrad quer zur Antriebswelle in einen Grundkörper des Getriebegehäuses eingesetzt wird, wobei die Anlaufscheibe in die Aufnahmen und die radialen Lageroberflächen des Getriebezahnrads in entsprechende Radiallager eingefügt werden. Danach kann das Getriebegehäuse durch die Montage eines Deckels radial zum Getriebezahnrad verschlossen werden, wodurch das Getriebezahnrad mittels der radialen Lageroberflächen und mittels der Anlaufscheibe sowohl radial, als auch axial zuverlässig fixiert ist.

Durch das erfindungsgemäße Verfahren kann auf einfache Weise in einem Arbeitsgang die Anlaufscheibe bezüglich dem Getriebezahnrad sowohl radial als auch axial mit minimalen Toleranzen montiert werden. Durch die Integration der Anlaufscheibe als Einlegeteil in das Spritzguss-Getriebezahnrad entfällt eine spätere Montage und Justage der Anlaufscheibe bezüglich des Getriebezahnrads, bzw. der darin angeordneten Gewindespindel. Die relativ hohe Werkstoffschwindung des Kunststoffs ermöglicht, dass beim Schwinden des Materials nach dem Spritzen und nach dem Abkühlen des Getriebezahnrads keine Kunststoffpressung mehr auf die Anlaufscheibe ausgeübt wird. Dadurch ist die Anlaufscheibe nach dem Abkühlen in der mittels Spritzen angeformten Ringnut mit zwei axialen Seitenwänden frei drehbar.

Durch die Auswahl der Material- und Prozessparameter beim Spritzgießen- insbesondere der Wärmeausdehnungskoeffizienten-, kann die gewünschte Schrumpfung des Kunststoffes gegenüber der metallischen Anlaufscheibe beeinflusst werden, so dass das auftretende Längsspiel gegenüber der Laufreibung optimiert werden kann.

### Zeichnungen

In den Zeichnungen sind Ausführungsbeispiele einer erfmdungsgemäßen Vorrichtung dargestellt und in der nachfolgenden Beschreibung näher erläutert. Es zeigen
- Figur 1: ein erFmdungsgemäßes Getriebezahnrad mit integrierter Anlaufscheibe,
- Figur 2: einen Längsschnitt durch ein weiteres Ausführungsbeispiel,
- Figur 3: zur Anschauung eine getrennt vom Getriebezahnrad dargestellte Anlaufscheibe und
- Figur 4: einen erfmdungsgemäßen Spindelantrieb mit offenem Getriebegehäuse.

### Beschreibung der Ausführungsbeispiele

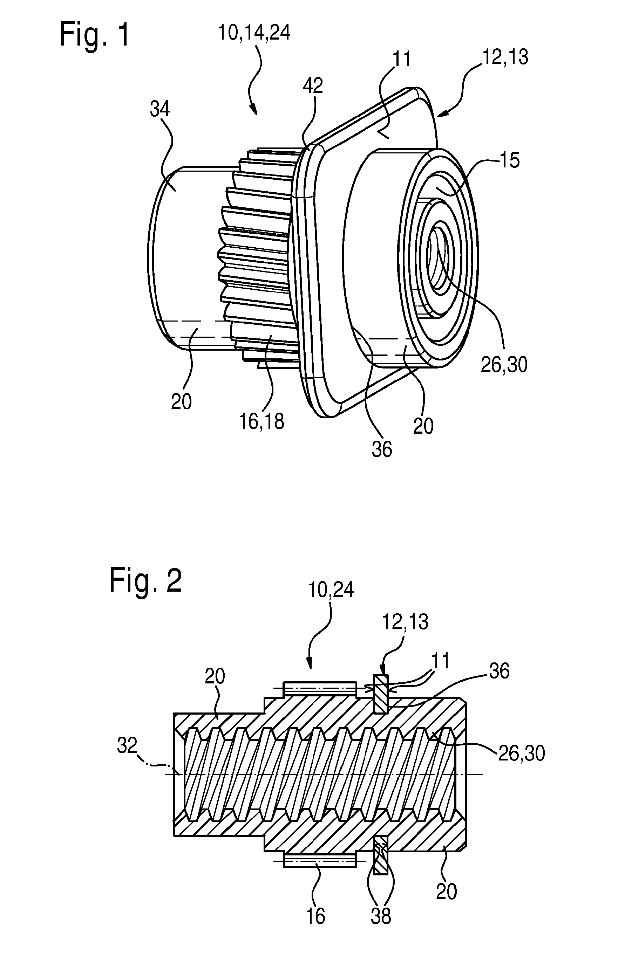

In Figur 1 ist ein Getriebezahnrad 10 dargestellt, in das drehbar zu diesem eine Anlaufscheibe 12 integriert ist. Das Getriebezahnrad 10 ist als Schneckenzahnrad 14 ausgebildet, das als Außenverzahnung 16 eine Schneckenradverzahnung 18 aufweist. Zur radialen Lagerung des Getriebezahnrads 10 weist dieses mehrere Bereiche 20 mit einer glatten radialen Oberfläche 20 auf, mittels derer das Getriebezahnrad 10 drehbar in einem Getriebegehäuse 22 gelagert werden kann. Das Getriebezahnrad 10 ist des Weiteren als Hohlzahnrad 24 mit einer Innenverzahnung 26 ausgebildet, die zur Aufnahme einer Spindel 28 dient. Das Getriebezahnrad 10 weist aus Gründen der einfacheren Herstellung Ausnehmungen 15 auf, um die Form und die Abmessungen des Getriebezahnrads 10 entsprechend dessen Anwendung anzupassen. Das Innengewinde 26 weist beispielsweise ein Trapez-Profil 30 auf, so dass die darin angeordnete Spindel 28 durch das drehende Getriebezahnrad 10 entlang der Längsrichtung 32 der Spindel 28 verstellt wird.

In Figur 2 ist ein weiteres Ausführungsbeispiel eines Getriebezahnrads 10 im Schnitt dargestellt, das wiederum die Außenverzahnung 16 und das Innengewinde 26 aufweist. Die Außenverzahnung 16 ist hier als Stirnverzahnung ausgebildet, die mit einem nicht näher dargestellten Antriebsrad kämmt. Die Anlaufscheibe 12 greift in eine über den Umfang 34 des Getriebezahnrads 10 umlaufende Ringnut 36 ein, die axiale Seitenwände 38 zur axialen Führung der Anlaufscheibe 12 aufweist. Die Anlaufscheibe 12 ist als einteilige Ringscheibe 13 mit zwei Stirnseiten 11 ausgebildet, an denen sich die axialen Seitenwände 38 der Ringnut 36 bei axialer Krafteinwirkung abstützen kann.

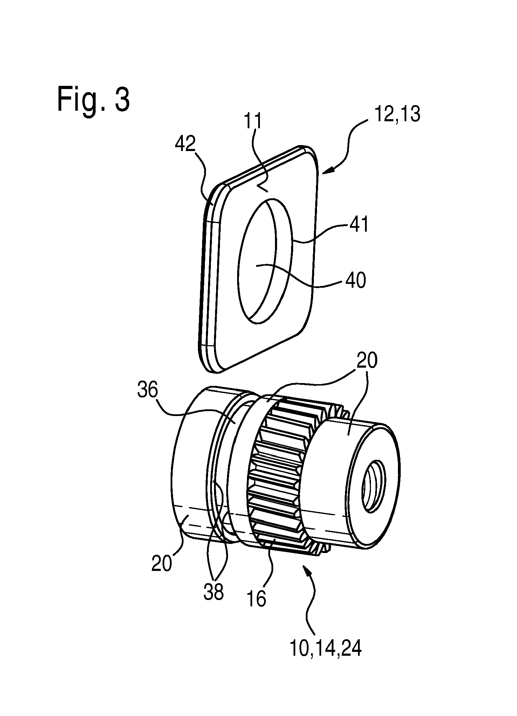

In Figur 3 ist die Anlaufscheibe 12, 13 schematisch als separates Bauteil vor dessen Integration in das Getriebezahnrad 10 dargestellt ist. Die Ringnut 36 mit den beiden axialen Seitenwänden 38 ist ebenfalls ohne die Ringscheibe 13 dargestellt, wobei in der Realität aufgrund des Herstellungsprozesses des Getriebezahnrads 10 die Auslaufscheibe 12 nicht mehr aus der Ringnut 36 zerstörungsfrei heraus gelöst werden kann.

Zur Herstellung des Getriebezahnrads 10 mit integrierter Anlaufscheibe 12 wird die Anlaufscheibe 12 als Einlegeteil in einen Spritzgussform eingelegt. Die Ringscheibe 13 ist aus Metall, beispielsweise aus Stahl mit einer runden, zentralen Aussparung 40 und einer näherungsweise viereckigen Außenkontur 42 ausgebildet. Danach wird der Kunststoff in die Spritzgussform eingespritzt, wobei am Randbereich 41 der Aussparung 40 die Ringnut 36 des Getriebezahnrads 10 angeformt wird. Zum Zeitpunkt des Einspritzens liegt der flüssige Kunststoff direkt axial und radial an der Anlaufscheibe 12 an. Nachdem das Getriebezahnrad 10 aus der Spritzgussform entfernt und abgekühlt ist, schwindet das Kunststoffmaterial derart, dass die Anlaufscheibe 12 sich innerhalb der Ringnut 13 lösen lässt, und in dieser gedreht werden kann. Die durch das Schrumpfen des Kunststoffs entstehenden Abstände zwischen der Anlaufscheibe 12 und den Seitenwänden 38 liegen im Bereich von wenigen hundertstel Millimeter, so dass das Getriebezahnrad 10 bezüglich der beiden Axialrichtungen 32 praktisch ein vernachlässigbares Axiallängsspiel aufweist. Der Kunststoff des Getriebezahnrads 10 schrumpft ebenfalls in radialer Richtung, so dass sich das Getriebezahnrad 10 bei festgehaltener Anlaufscheibe 12 unter sehr geringer Reibung drehen lässt.

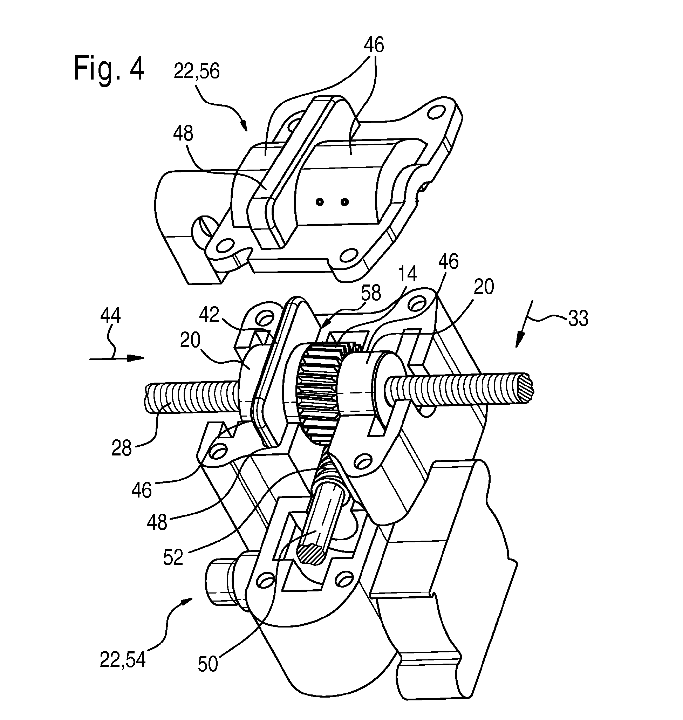

In Figur 4 ist ein Spindelgetriebe 44 dargestellt, bei dem das Getriebezahnrad 10 in das Getriebegehäuse 22 eingebaut ist. Dabei liegt das Getriebezahnrad 10 mit seinen radialen Lageroberflächen 20 direkt in entsprechende Lageraufnahmen 46 des Getriebegehäuses 22 an. Die radialen Lageroberflächen 20 des Getriebezahnrads 10 sind axial auf beiden Seiten der Anlaufscheibe 12 ausgebildet, um ein Verkippen des Getriebezahnrads 10 beim Einwirken axialer Kräfte zu verhindern. Die Anlaufscheibe 12 ist zur beidseitigen axialen Fixierung des Getriebezahnrads 10 - und damit der Spindel 28 - in eine Aufnahme 48 des Getriebegehäuses 22 eingepresst. In Figur 4 wird zur Montage zuerst eine Antriebswelle 50 mit einer Schnecke 52 in einen Grundkörper 54 des Getriebegehäuses 22 eingelegt. Die Antriebswelle 50 wird beispielsweise durch einen nicht näher dargestellten Elektromotor angetrieben. Danach wird das Schneckenzahnrad 14 mit der darin angeordneten Spindel 28 derart in den Grundkörper 54 eingelegt, dass die Außenverzahnung 16, 18 mit der Schnecke 52 kämmt. Dabei wird die Anlaufscheibe 12 in die taschenartige Aufnahme 48 eingeschoben, wobei diese bezüglich der Umfangsrichtung einen Formschluss 58 mit der Anlaufscheibe 12 bildet. Bei der näherungsweise viereckigen Außenkontur 42 der Anlaufscheibe 12 weist daher die Aufnahme 48, die im Grundkörper 54 und im Deckel 56 ausgebildet ist, nach der Montage des Deckels 56 in radialer Richtung 33 ebenfalls einen näherungsweise viereckigen Querschnitt bezüglich der Längsrichtung 32 auf. Aufgrund des erfindungsgemäßen Verfahren zur drehbaren Integration der Anlaufscheibe 12 in das Getriebezahnrad 10, kann das Getriebe 44 sehr schnell und einfach montiert werden. Die integrierte Anlaufscheibe 12 bewirkt dabei sowohl die axiale Lagerung in beiden Richtungen, als auch einen optimalen Längsspielausgleich der Spindel 28.

Es sei angemerkt, dass hinsichtlich der in den Figuren und der Beschreibung dargestellten Ausführungsbeispiele vielfältige Kombinationsmöglichkeiten der einzelnen Merkmale untereinander möglich sind. So kann das Getriebezahnrad 10 beispielsweise unterschiedliche Außenverzahnungen 16, 18 oder Innenverzahnungen 26 aufweisen. Die Erfindung ist dabei nicht auf ein Hohl- Schneckenzahnrad 14, 24 bzw. auf ein Spindelgetriebe 44 beschränkt. Die Werkstoffe und die konkrete Ausformung der Ringscheibe 13 und der Ringnut 36 können dabei derart variiert werden, so dass sich nach dem Spritzgießen und dem Abkühlen des Getriebezahnrads 10 das gewünschte Spiel zwischen der Anlaufscheibe 12 und der Ringnut 36 einstellt. Bevorzugt wird das erfindungsgemäße Getriebezahnrad 10 mit integrierter Anlaufscheibe 12 in einem Spindelantrieb 44 für eine Sitzverstellung im Kraftfahrzeug angewendet. Dabei werden die bei einem Crash auftretenden hohen axialen Kräfte in Längsrichtung 32 zuverlässig über das Getriebezahnrad 10 und die Anlaufscheibe 12 vom Getriebegehäuse 22 aufgenommen, so dass der Fahrzeugsitz näherungsweise in seiner ursprünglichen Position verharrt.

## Patentansprüche

1. Getriebezahnrad (10), insbesondere für ein Spindelgetriebe (44), mit einer Außenverzahnung (16, 18) zum Einleiten eines Antriebmoments, und mit einer Anlaufscheibe (12, 13) zur axialen Fixierung des Getriebezahnrads (10) in einem Getriebegehäuse (22),
**dadurch gekennzeichnet, dass** an dem Getriebezahnrad (10) über dessen Umfang (32) eine Ringnut (36) angeformt ist, in die die Anlaufscheibe (12, 13) drehbar eingreift, wobei die Anlaufscheibe (12, 13) als eine über den Umfang (32) geschlossene, einteilige Ringscheibe (13) ausgebildet ist, die unlösbar in das Getriebezahnrad (10) integriert ist.

2. Getriebezahnrad (10) nach Anspruch 1, **dadurch gekennzeichnet, dass** im Betriebszustand das Getriebezahnrad (10) in der drehfest angeordneten Anlaufscheibe (12, 13) mit geringem Axialspiel drehbar ist und sich beim Einwirken von axialen Lasten an den Stirnflächen (11) der Anlaufscheibe (12, 13) axial abstützt.

3. Getriebezahnrad (10) nach einem der Ansprüche 1 oder 2, **dadurch gekennzeichnet, dass** die Anlaufscheibe (12, 13) eine von einem Kreis abweichende - beispielsweise eine näherungsweise viereckige - Außenkontur (42) aufweist, um die Anlaufscheibe (12, 13) drehfest in einem Getriebegehäuse (22) zu fixieren.

4. Getriebezahnrad (10) nach einem der vorhergehenden Ansprüche, **dadurch gekennzeichnet, dass** die Außenverzahnung (16, 18) als Schneckenverzahnung (18) ausgebildet ist.

5. Getriebezahnrad (10) nach einem der vorhergehenden Ansprüche, **dadurch gekennzeichnet, dass** das Getriebezahnrad (10) als Hohlrad (24) mit einem Innengewinde (26) zur Aufnahme einer Spindel (28) ausgebildet ist.

6. Getriebezahnrad (10) nach einem der vorhergehenden Ansprüche, **dadurch gekennzeichnet, dass** die Anlaufscheibe (12, 13) aus Metall und das Getriebezahnrad (10) aus Kunststoff - insbesondere mittels Spritzguss-Verfahren - hergestellt ist.

7. Spindelgetriebe (44) mit einem Getriebegehäuse (22), einer darin gelagerten Antriebsschnecke (52) und einer Spindel (28), **dadurch gekennzeichnet, dass** die Kraftübertragung von der Antriebswelle (50) auf die Spindel (28) mittels des Getriebezahnrads (10) nach einem der vorhergehenden Ansprüche erfolgt.

8. Spindelgetriebe (44) nach Anspruch 7, **dadurch gekennzeichnet, dass** die Anlaufscheibe (12, 13) in eine Aufnahme (48) des Getriebegehäuses (22, 54, 56) gepresst ist, die bezüglich der Verdrehung der Anlaufscheibe (12, 13) einen Formschluss (58) bildet.

9. Spindelgetriebe (44) nach Anspruch 7 oder 8, **dadurch gekennzeichnet, dass** das Getriebezahnrad (10) Bereiche mit einer glatten radialen Oberfläche (20) aufweist - insbesondere axial beidseitig benachbart zur Anlaufscheibe (12, 13) -, mittels derer das Getriebezahnrad (10) radial im Getriebegehäuse (22, 54, 56) gelagert ist.

10. Spindelgetriebe (10) nach einem der Ansprüche 7 bis 9, **dadurch gekennzeichnet, dass** das Getriebegehäuse (22) einen Grundkörper (54) und einen Deckel (56) aufweist, der radial zum Getriebezahnrad (10) auf den Grundkörper (54) montierbar ist, und sich die Aufnahme (48) sowohl über den Grundkörper (54), als auch über den Deckel (56) erstreckt.

11. Verfahren zum Herstellen des Getriebezahnrads (10) mit integrierter Anlaufscheibe (12, 13) insbesondere nach einem der vorhergehenden Ansprüche, mit den folgenden Schritten:
- Einlegen der einteiligen Anlaufscheibe (12, 13) aus Metall - insbesondere Stahl - in eine Spritzguss-Form, wobei die Anlaufscheibe (12, 13) eine zentrale, kreisförmige Aussparung (40) aufweist
- Spritzgießen des Getriebezahnrads (10), wobei eine die Anlaufscheibe (12, 13) aufnehmende, umlaufenden Ringnut (36) ausgeformt wird
- Drehen der Anlaufscheibe (12, 13) gegenüber der Ringnut (36) nach der Entnahme und dem Abkühlen des Getriebezahnrads (10)

12. Verfahren nach Anspruch 11, **dadurch gekennzeichnet, dass** zum Spritzgießen des Getriebezahnrads (10) ein Kunststoff - insbesondere POM - verwendet wird, dessen Wärmeausdehnungskoeffizient größer ist, als der des metallischen Werkstoffs der Anlaufscheibe (12, 13).
